## Europäisches Patentamt

## European Patent Office

## Office européen des brevets

(11) Publication number: **0 159 097**
**B1**

# EUROPEAN PATENT SPECIFICATION

(45) Date of publication of patent specification: 29.08.90

(51) Int. Cl.⁵: **C 10 G 45/04, B 01 J 23/28**

(21) Application number: 85200574.3

(22) Date of filing: 15.04.85

(54) Process for the catalytic conversion of heavy hydrocarbon oils.

(30) Priority: 16.04.84 GB 8409823

(43) Date of publication of application:
23.10.85 Bulletin 85/43

(45) Publication of the grant of the patent:
29.08.90 Bulletin 90/35

(84) Designated Contracting States:
BE DE FR GB NL SE

(56) References cited:
EP-A-0 041 284
EP-A-0 067 708
DE-A-1 545 416
GB-A-2 073 770

(73) Proprietor: SHELL INTERNATIONALE
RESEARCH MAATSCHAPPIJ B.V.
Carel van Bylandtlaan 30
NL-2596 HR Den Haag (NL)

(72) Inventor: Röbschläger, Karl-Heinz Wilhelm
Badhuisweg 3
NL-1031 CM Amsterdam (NL)

(74) Representative: Aalbers, Onno et al
P.O. Box 302
NL-2501 CH The Hague (NL)

Courier Press, Leamington Spa, England.

EP 0 159 097 B1

**Description**

The present invention relates to a process for the catalytic conversion of heavy hydrocarbon oils by contacting the oils with a catalyst at elevated temperature and pressure in the presence of hydrogen.

In the process of catalytically converting heavy hydrocarbon oils into valuable lighter products, and in particular in the upgrading of residual hydrocarbon oils, the feedstocks to be used are normally subjected to one or more pre-treatments to substantially reduce the amount of metals and/or sulphur present therein. It is well known that metals and sulphur exert a detrimental effect on the life of catalysts used in conversion processes.

The use of catalysts comprising nickel and/or vanadium on porous carriers such as silica in demetallization processes is well established. Reference is made in this respect to Dutch patent specification 7309387.

It is known from United States patent specification 4,102,779 that heavy residual hydrocarbon oils having a high metal content can be demetallized using a Group VIB and/or a Group VIII catalyst. The product obtained has to be subjected to a desulphurization treatment using an appropriate catalyst prior to its use as feedstock in a cracking process. From European patent specification 67,708 a catalyst is known comprising a support and at least one metal selected from the group consisting of the Group VIB metals, the Group VIII metals and vanadium, which catalyst has a BET surface area of 150 to about 190 m$^2$/g, pore volume of about 0.8 to about 1.2 cc/g in macropores having radii up to 600 A, with at least 0.7 cc/g in pores with radii ranging from 50 to 600 A, pore volume of 0.1 to about 0.5 cc/g in macropores having radii of 600 to 25,000 A, and bulk density of about 0.3 to about 0.5 g/cc. This catalyst can be used for hydrotreating hydrocarbons.

It is further known from European patent specification 41,284 that certain catalysts containing exclusively molybdenum in a quantity of more than 2.0 parts by weight per 100 parts by weight of porous carrier can be used advantageously in the demetallization of hydrocarbon oils having a low C$_5$-asphaltenes content and a metal content (Ni + V) between 5 and 150 parts per million by weight (ppmw), in particular in the demetallization of distillates obtained in the distillation at reduced pressure of long residues and deasphalted short residues. The oils thus demetallized can be subjected to catalytic conversion processes to produce light hydrocarbon oils.

From comparative experimental data present in said European patent specification it appears that residual hydrocarbons having a relatively high content C$_5$-asphaltenes together with a metal content above 150 ppm are not demetallized satisfactorily so that the product obtained does not quality as suitable feed for further catalytic processing.

It would be of great importance to find a process for the catalytic conversion of residual hydrocarbon oils, and in particular residual hydrocarbon oils having a relatively high C$_5$-asphaltenes content, using catalysts which also exert sufficient demetallization activity, preferably together with sufficient desulphurization activity since this would reduce the number of separate process steps accordingly.

A process for the hydroconversion of heavy hydrocarbon oils has now surprisingly been found wherein hydrocarbon oils of which more than 70% by volume boils above 360°C and which have a C$_5$-asphaltenes content of more than 2.5% by weight and a vanadium + nickel content of less than 350 ppm are contacted at elevated temperature and at a pressure of more than 100 bar and in the presence of hydrogen with a catalyst containing as carrier silica and as metal with hydrogenation activity exclusively molybdenum in a quantity of between 2 and 15 parts by weight per 100 parts by weight of silica, which catalyst has an average pore diameter in the range of 5—30 nm.

The hydroconversion process according to the present invention is applied to residual hydrocarbon oils of which more than 70% by volume boils above 360°C and which have a C$_5$-asphaltenes content of more than 2.5% by weight and a vanadium + nickel content of less than 350 ppm. Preferably, residual hydrocarbon oils of which more than 40% by volume boils above 520°C are used as starting material. Preferred feedstocks are those which have been obtained at least partly as a distillation residue of a distillation under reduced pressure of an atmospheric residue. The C$_5$-asphaltenes content of the residual hydrocarbon oils to be used as starting material is preferably more than 10% by weight, in particular between 15% by weight and 25% by weight.

The catalyst that can be used in the process according to the present invention contain as metal with hydrogenation activity exclusively molybdenum in a quantity of between 2 and 15 parts by weight per 100 parts by weight of silica and have an average pore diameter between 5 and 30 nm. Excellent results have been obtained using molybdenum in an amount between 2.5 and 12.5, in particular between 2.5 and 10 parts by weight per 100 parts by weight of silica. With silica is meant silica obtainable by methods known to those skilled in the art; they can of course comprise minor amounts of impurities, which will normally be the case in commercially available silicas.

The molybdenum may be present on the carrier in metallic form or as molybdenum oxide or sulphide. The use of catalysts in sulphidic form is preferred. The preparation of the catalysts to be used in the present process is preferably carried out by impregnating a porous carrier with an aqueous solution containing the one or more molybdenum compounds, followed by drying and calcining the composition thus obtained. Special preference is given to the preparation of suitable catalysts by the "dry" impregnation technique, in which the porous silica carrier is contacted with a quantity of impregnation liquid, the volume of which

2

mainly corresponds with the pore volume of the carrier, followed by drying and calcining the composition obtained.

Silica particles which can be used suitably as carrier for the catalysts to be used in the process according to the present invention can be prepared by spray-drying of a silica gel followed by extrusion of the spray-dried micro particles to form larger particles. Also substantially spherical silica particles obtained by means of the known oil drop method can be used advantageously. In the latter method a silica hydrosol is formed, the hydrosol is combined with a gelation agent and the mixture is dispersed as drops in an oil until they have solidified to spherical hydrogel particles which are subsequently separated off, washed, dried and calcined. The present catalysts or catalyst carriers can inter alia be formed by extrusion or tabletting. In addition to these shaping techniques, especially the known nodulizing technique is a very attractive shaping method for the present catalysts or catalyst carriers. By this method catalyst particles having a diameter of at most 0.1 mm are agglomerated to particles with a diameter of at least 1 mm by means of a granulation liquid.

The catalyst to be used in the process according to the present invention normally have an average particle diameter between 0.5 and 5 mm, in particular between 0.5 and 2.5 mm. The average pore diameter of the catalyst particles to be applied is in the range between 5 and 30 nm, preferably between 5 and 25 nm and in particular between 10 and 20 nm. Such catalysts are referred to as "narrow pore" catalysts.

The complete pore diameter distribution of a catalyst can be determined by means of the nitrogen adsorption/desorption method (as described by E. V. Ballou and O. K. Doolen in Analytic Chemistry *32*, 532 (1960)) in combination with the mercury penetration method (as described by H. L. Ritter and L. C. Drake in Industrial and Engineering Chemistry, Analytical Edition *17*, 787 (1945)), using mercury pressures of 1—2000 bar. The pore diameter distribution of a catalyst in the pore diameter range of 7.5 nm and below is calculated with reference to the nitrogen desorption isotherm (assuming cylindrical pores) by the method described by J. C. P. Broekhoff and J. H. de Boer in Journal of Catalysis 10, 377 (1968) and the pore diameter distribution of a catalyst in the pore diameter range above 7.5 nm is calculated by means of the formula

$$\text{pore diameter (in nm)} = \frac{15{,}000}{\text{absolute mercury pressure (in bar)}}$$

The total pore volume of a catalyst is the sum of the nitrogen pore volume present in pores with a diameter of 7.5 nm and below (determined by means of the above-mentioned nitrogen adsorption/desorption method) and the mercury pore volume present in pores with a diameter above 7.5 nm (determined by means of the above-mentioned mercury penetration method).

After a complete pore diameter distribution of a catalyst sample has been determined, the pore diameter is read from a graph in which for the pore diameter range of from 0 to 100 nm for each successive pore volume increment that is present in pores with an equal diameter interval smaller than or equal to 2 nm, and which pore volume increment is smaller than or equal to 10% of the pore volume, the quotient of the pore volume increment and the corresponding pore diameter interval has been cumulatively plotted as a function of the linear average pore diameter over the relevant pore diameter interval; the average pore diameter is the pore diameter corresponding to 50% of the total quotient.

The average particle diameter can be determined as follows. After a complete sieve analysis of a representative catalyst sample, using the set of standard sieves described in the 1969 Book of ASTM Standards, Part 30, pp. 96—101 (ASTM Designation: E11—61), has been carried out, the average particle diameter is read from a graph in which for each successive sieve fraction the percentage by weight, based on the total weight of the catalyst sample, has been cumulatively plotted as a function of the linear average particle diameter of the relevant sieve fraction; the average particle diameter is the particle diameter corresponding to 50% of the total weight.

The process according to the present invention is suitably carried out by passing the heavy hydrocarbon oil to be converted at elevated temperature and pressure in the presence of hydrogen, in upward, downward or radial direction through one or more vertically arranged reactors containing a fixed or moving bed of the appropriate catalyst particles. If described, the process can also be carried out by suspending the catalyst in the hydrocarbon oil to be converted. The process according to the present invention is suitably carried out at a temperature of 300—475°C, a hydrogen partial pressure of up to 300 bar and a space velocity of 0.08—10 kg.$l^{-1}$.$h^{-1}$. Preferably the process according to the present invention is carried out at a temperature between 350°C and 450°C, a hydrogen partial pressure of up to 250 bar and a space velocity of 0.1—7.5 kg.$l^{-1}$.$h^{-1}$.

When residual heavy hydrocarbon oils are to be converted which have a total metal content in excess of 350 ppm, such hydrocarbon oils should be subjected to a pre-treatment to reduce the total metal content to a value below 350 ppm. This demetallization treatment can be carried out suitably by using demetallization catalysts well-known in the art, for instance catalysts described in Dutch patent application 7309387. Very good results can be obtained using supported demetallization catalysts having an average pore diameter larger than 30 nm, in particular catalyst containing nickel and/or vanadium.

3

Part or all of the product obtained by the hydroconversion process according to the present invention may be subjected to further catalytic processes, in particular to catalytic processes to obtain light hydrocarbon oils.

The process according to the present invention is preferably carried out in bunker flow operation, i.e. in reactors which ensure mass flow of the catalyst particles and which are designed in such a way that periodically or continually catalyst particles can be withdrawn from the bottom of the reactor while fresh catalyst particles can be introduced in the upper part of the reactor. Normally such reactors contain one or more catalyst beds resting on conical supports and having a central catalyst-outlet duct provided with screens to separate liquid and gaseous effluent from the catalyst particles. The process according to the present invention can also be carried out suitably in a number of reactors in series, one of them may be temporarily off-stream to replenish the catalyst load.

The invention will now be illustrated with reference to the following Examples.

Example I

Experiments were carried out using three different catalysts (A, B and C) for the hydroconversion of a short residue obtained by distillation under reduced pressure of an atmospheric distillation residue of a crude oil from the Middle East.

The properties of the catalysts applied are given in Table I. Catalyst A is used as a comparative catalyst (a wide-pore nickel/vanadium on silica catalyst) which activities for certain processes have been set as 1 (see table II). The catalysts B and C were prepared by impregnating a silica carrier with a solution of ammonium dimolybdate in 25% wt ammonia. The resulting mixture was stirred for one hour and thereafter dried at 120°C for one hour followed by calcination at 450°C for one hour.

### TABLE I

| Catalyst | Metal(s)* %w | Pore volume ml/g | Average Pore diameter meter nm | Average particle diameter mm |
|---|---|---|---|---|
| A | Ni:0.48+V:1.92 | 0.87 | 59 | 1.5 |
| B | Mo:4.25 | 0.9 | 14 | 1.3 |
| C | Mo:11.77 | 0.52 | 12 | 1.5-1.8 |

* basis 100% silica carrier

The heavy residual hydrocarbon oil of which 95% by volume boiled above 520°C and which contained 5.5% wt of sulphur and 205 ppm vanadium + nickel and which had a $C_5$-asphaltenes content of 24% wt and a Conradson Carbon Residue (CCR) of 22% wt was passed together with hydrogen in downward direction through a vertically arranged cylindrical reactor containing a fixed bed of the appropriate catalyst at a temperature of 410°C and a hydrogen partial pressure of 120 bar at a space velocity of 1.4 kg.$l^{-1}.h^{-1}$ in a gas/liquid once through operation. In the method for determining the CCR, ASTM designation: D 189, the amount of carbon residue is determined which is left after evaporation and pyrolysis of an oil.

The results, expressed as relative activities based on catalyst volume, are given in Table II.

### TABLE

| Removal of / Catalyst | A | B | C |
|---|---|---|---|
| Sulphur | 1 | 4.1 | 5.1 |
| Vanadium | 1 | 1.8 | 1.5 |
| > 520 °C | 1 | 1.7 | 2.0 |
| Ramsbottom Carbon Test(RCT) | 1 | 1.7 | 2.0 |
| $C_5$-asphaltenes | 1 | 1 | 1 |

## EP 0 159 097 B1

In the method for determining the RCT, ASTM designation: D 524, the amount of carbon residue is determined which is left after evaporation and pyrolysis of an oil. Values obtained by this method are not numerically the same as those obtained by the Conradson Carbon Residue test.

It will be clear from the results given in Table II that heavy residual hydrocarbon oils having a high asphaltenes content can be converted advantageously using the process according to the present invention compared with the performance of a well-known demetallization catalyst (catalyst A).

Example II

The experiments described in the previous Example were continued using the same catalyst and the same heavy residual hydrocarbon oil until 15% wt of vanadium had been deposited on the catalysts. The results, expressed again as relative activities based on catalyst volume and relating to 15% wt vanadium deposit, are given in Table III.

### TABLE III

| Catalyst / Removal of | A | B | C |
|---|---|---|---|
| sulphur | 1 | 3.5 | 4.7 |
| vanadium | 1 | 1.3 | 0.8 |
| > 520 °C | 1 | 1.5 | 1.9 |
| RCT | 1 | 1.7 | 2.0 |
| $C_5$-asphaltenes | 1 | 1 | 1 |

From the experiments carried out with catalysts B and C it will be clear that even at a relatively large vanadium uptake the hydroconversion performance of the catalysts is still significantly better than experienced with the comparative catalyst A whilst the relative activity for the removal of $C_5$-asphaltenes remains unchanged.

### Claims

1. A process for the hydroconversion of heavy hydrocarbon oils wherein hydrocarbon oils of which more than 70% by volume boils above 360°C and which have a $C_5$-asphaltenes content of more than 2.5% by weight and a vanadium + nickel content of less than 350 ppmw, are contracted at elevated temperature and at a pressure of more than 100 bar and in the presence of hydrogen with a catalyst containing as carrier silica and as metal with hydrogenation activity exclusively molybdenum in a quantity of between 2 and 15 parts by weight per 100 parts by weight of silica, which catalyst has an average pore diameter in the range of 5—30 nm.

2. A process according to claim 1, wherein a heavy hydrocarbon oil is used of which more than 40% by volume boils above 520°C.

3. A process according to claim 2, wherein a hydrocarbon oil is used which has been obtained at least partly as a distillation residue of a distillation under reduced pressure of an atmospheric residue.

4. A process according to any one of claims 1—3, wherein a heavy hydrocarbon oil is used having a $C_5$-asphaltenes content of more than 10% by weight.

5. A process according to any one of claims 1—4, wherein use is made of a catalyst containing 2.5—12.5 parts by weight of molybdenum per 100 parts by weight of silica.

6. A process according to claim 5, wherein use is made of a catalyst containing 2.5—10 parts by weight of molybdenum per 100 parts by weight of silica.

7. A process according to any one of claims 1—6, wherein a catalyst is used which has an average pore diameter in the range of 5—25 nm.

8. A process according to claim 7, wherein a catalyst is used which has an average pore diameter in the range of 10—20 nm.

9. A process according to any one of claims 1—8, wherein molybdenum is present as sulphide in the catalyst.

10. A process according to any one of claims 1—9, which is carried out at a temperature between 350°C and 450°C, a hydrogen partial pressure of up to 250 bar and a space velocity between 0.1 and 7.5 $kg.l^{-1}.h^{-1}$.

5

11. A process according to any one of claims 1—10, wherein a heavy hydrocarbon oil of which the vanadium + nickel content has been reduced to less than 350 ppmw by a demetallization treatment, is used as feed.

12. A process according to claim 11, wherein the demetallization pre-treatment is carried out using a supported demetallization catalyst having an average pore diameter larger than 30 nm.

13. A process according to any one of claims 1—12, wherein at least part of the hydroconverted product is subjected to a further catalytic conversion process.

**Patentansprüche**

1. Ein Verfahren die Hydroumwändlung von schweren Kohlenwasserstoffölen, in welchem Kohlenwasserstofföle, die zu mehr als 70 Volumenprozent bei einer Temperatur von mehr als 360°C sieden und die einen Gehalt an $C_5$-Asphaltenen von mehr als 2,5 Gewichtsprozent aufweisen und einen Gehalt an Vanadium + Nickel von weniger als 350 Gewichtsteilen p.M. aufweisen, bei erhöhter Temperatur und bei einem Druck von mehr als 100 bar und in Gegenwart von Wasserstoff mit einem Katalysator, enthaltend Siliciumdioxid als Träger und als Metall mit Hydrieraktivität ausschließlich Molybdän in einer Menge von 2 bis 15 Gewichtsteilen pro 100 Gewichtsteile Siliciumdioxid, welcher Katalysator einen durchschnittlichen Porendurchmesser im Bereich von 5 bis 30 nm aufweist, kontaktiert werden.

2. Ein Verfahren nach Anspruch 1, in welchem ein schweres Kohlenwasserstofföl eingesetzt wird, das zu mehr als 40 Volumenprozent bei einer Temperatur über 520°C siedet.

3. Ein Verfahren nach Anspruch 2, in welchem ein Kohlenwasserstofföl eingesetzt wird, welches zumindest teilweise als Destillationsrückstand aus einer Distillation unter reduziertem Druck eines atmosphärischen Rückstandes erhalten worden ist.

4. Ein Verfahren nach einem der Ansprüche 1 bis 3, in welchem ein schweres Kohlenwasserstofföl mit einem Gehalt an $C_5$-Asphaltenen von mehr als 10 Gewichtsprozent eingesetzt wird.

5. Ein Verfahren nach einem der Ansprüche 1 bis 4, in welchem ein Katalysator mit 2,5 bis 12,5 Gewichtsteilen Molybdän pro 100 Gewichtsteile Siliciumdioxid eingesetzt wird.

6. Ein Verfahren nach Anspruch 5, in welchem ein Katalysator mit 2,5 bis 10 Gewichtsteilen Molbdän pro 100 Gewichtsteile Siliciumdioxid eingesetzt wird.

7. Ein Verfahren nach einem der Ansprüche 1 bis 6, in welchem ein Katalysator eingesetzt wird, der einen durchschnittlichen Porendurchmesser im Bereich von 5 bis 25 nm aufweist.

8. Ein Verfahren nach Anspruch 7, in welchem ein Katalysator eingesetzt wird, welcher einen durchschnittlichen Porendurchmesser im Bereich von 10 bis 20 nm aufweist.

9. Ein Verfahren nach einem der Ansprüche 1 bis 8, in welchem Molybdän als Sulfid in dem Katalysator vorliegt.

10. Ein Verfahren nach einem der Ansprüche 1 bis 9, welchem bei einer Temperatur zwischen 350 und 450°C, einem Wasserstoffpartialdruck von bis 250 bar und einer Raumgeschwindigkeit zwischen, 0,1 und 7,5 $kg.l^{-1}.h^{-1}$ durchgeführt wird.

11. Ein Verfahren nach einem der Ansprüche 1 bis 10, in welchem ein schweres Kohlenwasserstofföl, dessen Gehalt an Vanadium + Nickel durch eine Entmetallisierungsbehandlung auf weniger als 350 Gewichtsteile p.M. reduziert worden ist, als Ausgangsmaterial eingesetzt wird.

12. Ein Verfahren nach Anspruch 11, in welchem die Entmetallisierungs-Vorbehandlung unter Verwendung eines Entmetallisierungskatalysators auf einem Träger mit einem durchschnittlichen Porendurchmesser von mehr als 30 nm durchgeführt wird.

13. Ein Verfahren nach einem der Ansprüche 1 bis 12, in welchem mindestens ein Teil des der Hydroumwandlung unterworfenen Produkts einem weiteren katalytischen Umwandlungsprozeß unterworfen wird.

**Revendications**

1. Procédé d'hydroconversion d'huiles hydrocarbonées lourdes, dans lequel on met en contact des huiles hydrocarbonées dont plus de 70% en volume bout au-dessus de 360°C et qui ont une teneur en asphaltènes en $C_5$ supérieure à 2,5% en poids et une teneur en vanadium + nickel inférieure à 350 ppm, à une température élevée et sous une pression supérieure à 100 bars et en présence d'hydrogène, avec un catalyseur contenant comme support de la silice et comme métal ayant une activité d'hydrogénation exclusivement du molybdène et une quantité comprise entre 2 et 15 parties en poids pour 100 parties en poids de silice, ce catalyseur ayant un diamètre moyen de pores dans l'intervalle de 5—30 nm.

2. Procédé selon la revendication 1, dans lequel on utilise une huile hydrocarbonée lourde dont plus de 40% en volume bout au-dessus de 520°C.

3. Procédé selon la revendication 2, dans lequel on utilise une huile hydrocarbonée qui a été obtenue au moins partiellement comme résidu de distillation sous pression réduite d'un résidu atmosphérique.

4. Procédé selon l'une quelconque des revendications 1—3, dans lequel on utilise une huile hydrocarbonée lourde ayant un teneur en asphaltènes en $C_5$ supérieure à 10% en poids.

5. Procédé selon l'une quelconque des revendications 1—4, dans lequel on utilise un catalyseur contenant 2,5—12,5 parties en poids de molybdène pour 100 parties en poids de silice.

6. Procédé selon la revendication 5, dans lequel on utilise un catalyseur contenant 2,5—10 parties en poids de molybdène pour 100 parties en poids de silice.

7. Procédé selon l'une quelconque des revendications 1—6, dans lequel on utilise un catalyseur qui a un diamètre moyen de pores dans l'intervalle 5—25 nm.

8. Procédé selon la revendication 1, dans lequel on utilise un catalyseur qui a un diamètre moyen de pores dans l'intervalle 10—20 nm.

9. Procédé selon l'une quelconque des revendications 1—8, dans lequel le molybdène est présent sous forme de sulfure dans le catalyseur.

10. Procédé selon l'une quelconque des revendications 1—9, qui est mis en oeuvre à une température comprise entre 350°C et 450°C, sous une pression partielle d'hydrogène allant jusqu'à 250 bars et à une vitesse spatiale comprise entre 0,1 et 7,5 kg.l$^{-1}$.h$^{-1}$.

11. Procédé selon l'une quelconque des revendications 1—10, dans lequel on utilise comme charge une huile hydrocarbonée lourde dont la teneur en vanadium + nickel a été réduite à moins de 350 ppm en poids par un traitement de démétallisation.

12. Procédé selon la revendication 11, dans lequel on réalise le pré-traitement de démétallisation en utilisant un catalyseur de démétallisation sur support ayant un diamètre moyen de pores supérieur à 30 nm.

13. Procédé selon l'une quelconque des revendications 1—12, dans lequel on soumet au moins une partie du produit hydroconverti à un autre procédé de conversion catalytique.